# FASCICULE DE BREVET EUROPEEN

(11) **EP 0 498 866 B1**
(45) Date de publication et mention de la délivrance du brevet: **22.11.1995**
(21) Numéro de dépôt: 91915559.8
(22) Date de dépôt: 13.08.1991
(51) Int. Cl.: B60S 1/06, B60S 1/32

(54) **ESSUIE-GLACE CENTRALISE FLEXIBLE A ASPIRATION ET ASPERSION INTEGREES**
BIEGSAM-ZENTRALISIERTER SCHEIBENWISCHER MIT EINGEBAUTEM ANSAUGEN UND SPRITZEN
FLEXIBLE CENTRALISED SCREEN WIPER WITH INTEGRAL SUCTION AND SPRAY

(30) Priorité: 17.08.1990 FR 9010508
(43) Date de publication de la demande: 19.08.1992
(73) Titulaire: GUERAUD, Jöel Roger Jean, F-30000 Nîmes (FR)
(72) Inventeur: GUERAUD, Jöel Roger Jean, F-30000 Nîmes (FR)
(74) Mandataire: Kopacz, William James
(86) Numéro de dépôt international: FR9100665
(87) Numéro de publication internationale: WO9203312

(56) Documents cités:
- DE-A- 1 480 610
- FR-A- 732 452
- FR-A- 1 130 718
- FR-A- 2 373 426
- FR-A- 2 402 553
- GB-A- 2 162 420

## Description

La présente invention se rapporte à un dispositif assurant l'essuyage, d'une manière générale, les vitres, et plus particulièrement, l'essuyage des vitres sur les véhicules en tout genre, notamment véhicules automobiles terrestres, spatiaux ou navals sans aucune limitation.

Les dispositifs utilisés traditionnellement pour assurer l'essuyage des vitres sur véhicules sont constitués d'une lame animée d'un mouvement circulaire alternatif décrivant un secteur de cercle. Ces dispositifs ont l'inconvénient de réduire le champ d'essuyage de la vitre sur laquelle les zones non essuyées sont constamment éclaboussées par les projections extérieures, occasionnant des gênes visuelles qui éblouissent le conducteur, notamment lors de conduite nocturne, car les projecteurs lumineux intensifient leur rayonnement au travers de ces projections.

Les dispositifs traditionnels ont également l'inconvénient de décrire un secteur circulaire créant sur toute la longueur de la lame des contraintes physiques différentes de telle sorte que la lame ripe sur ladite vitre, de telle sorte que la lame broute et se décolle du pare-brise.

Les dispositifs traditionnels ont également l'inconvénient de n'être maintenus que par un point qui, en général, est le point d'entraînement de la lame, de telle sorte que malgré les différents artifices qui ont pour objectif de plaquer la lame contre la vitre, des phénomènes d'hydroglisseur et d'aquaplanage décollent la lame de la vitre grâce à un film fluidique (eau, air ...), qui se crée entre la lame et la vitre, phénomène accentué par des agents atmosphériques violents et soudains tels bourrasques naturelles ou occasionnées par le croisement d'autres véhicules...

Les dispositifs traditionnels, outre les inconvénients précités ont l'inconvénient majeur de racler les projections extérieures, de telle sorte que la lame en mouvement pousse contre elle par accumulation toutes les projections, de telle sorte que l'eau notamment, est déplacée sur la vitre en vagues éparses extrêmement gênantes et dangereuses, notamment lors de circulation nocturne et surtout lorsque d'autres véhicules envoient d'autres projections sur les vitres lors de croisements ou dépassements.

Les dispositifs traditionnels ont comme inconvénient de projeter l'eau, notamment sur les côtés, de telle sorte que cela provoque une gêne périphérique, notamment lorsque le véhicule est à l'arrêt et que la vitesse de déplacement de la lame est élevée.

Les dispositifs traditionnels sont couramment associés à des jets d'eau ayant pour objet d'humidifier la vitre, de telle sorte que la lame ait un pouvoir de nettoyage de la vitre. Les dispositifs traditionnels ont pour inconvénient de projeter l'eau contre la vitre, de telle sorte que cette eau projetée est gênante durant tout le temps où elle n'est pas totalement essuyée par ladite lame, l'eau projetée n'étant pas contenue par la lame mais repoussée jusqu'à ce que le conducteur ait estimé que la vitre est assez sèche.

On connaît en particulier le brevet français FR-A-2 373 426 concernant un balai d'essuie-glace délimitant un canal ouvert à ses deux extrémités frontales. Ces ouvertures frontales sont destineés au rejet de l'eau contenue entre les deux lèvres du balai.

La présente invention vise à remédier aux inconvénients majeurs énoncés ci-dessus.

En conséquence, la présente invention a pour but de fournir un dispositif d'essuyage de vitres assurant notamment et sans limitation les avantages suivants :
- la lame d'essuyage assure l'aspiration des projections se trouvant sur la vitre de telle sorte que lesdites projections disparaissent au passage de la lame.
- la lame d'essuyage assure l'aspersion de liquide de nettoyage sur le pare-brise, de telle sorte que ladite lame contient ledit liquide, de telle sorte que le liquide n'apparaisse pas sur le pare-brise
- la lame d'essuyage est tendue d'une manière semi-élastique entre deux points qui se déplacent simultanément de telle sorte que le contact permanent entre la lame et la vitre soit assuré.
- la lame d'essuyage parcourt l'intégralité de la surface vitrée de telle sorte que la surface vitrée soit totalement nettoyée.
- la lame d'essuyage a un déplacement rectiligne et linéaire assurant des contraintes physiques régulières à la lame et, dans lequel dispositif les mouvements de va-et-vient de deux tiges de manoeuvre creuses entraînent la lame d'essuyage tendue entre ces deux tiges, avec régularité et souplesse contre une vitre.

L'invention est un dispositif d'essuie-glace du type divulgué par FR-A-2 373 426 et défini par les revendications indépendantes 1 et 2. Divers modes de réalisation de l'invention sont indiqués dans les revendications dépendantes 3 à 15.

D'autres caractéristiques et avantages de la présente invention ressortiront de la description qui va suivre, donnée uniquement à titre d'exemple nullement limitatif, en référence au dessin annexé, et dans lequel :
- la figure 1 est une vue schématique en perspective d'un véhicule équipé de l'invention suivant une disposition donnée à titre d'exemple non limitatif.
- la figure 2 est une vue schématique du mécanisme, objet de l'invention dans une des configurations les plus complètes (lame pour pare-brise avant, lame pour custode (12), aspiration et aspersion par lame avant).
- la figure 3 est une vue en coupe du système de manoeuvre (22) des deux tiges avant de manoeuvre (16) et du piston de synchronisation (42), avec aspiration-aspersion, montrant également le dispositif d'inversion de sens de marche (29).
- la figure 4A est une vue en coupe d'une tige de manoeuvre (43) de la lame arrière (9) et de la gaine auxiliaire de manoeuvre (7).
- la figure 4B est une vue en coupe de la gaine auxiliaire de manoeuvre (7) réalisée sous forme de deux gaines jumelées.
- la figure 4C représente un groupe compresseur (66,67) susceptible d'alimenter la tige arrière de manoeuvre (7) dans le cas où la lame arrière est éloignée de la lame avant, et que les deux dites lames avant et arrière sont indépendantes.
- la figure 5A est une vue en coupe de la gaine auxiliaire de manoeuvre (7) dans le cas d'un seul logement commun à la gaine avant de manoeuvre (43) et à la gaine arrière (61) de manoeuvre.
- la figure 5B représente le logement côte-à-côte de la gaine avant (43) et de la gaine arrière (61) de manoeuvre, au niveau de la gaine auxiliaire (7).
- la figure 6 est une vue en coupe de la gaine arrière (8) assurant la contenance de la tige arrière de manoeuvre (61).
- la figure 7 est une vue en coupe d'une tige arrière de manoeuvre (61) contenue dans sa gaine (8) assurant sa contenance.
- la figure 8 est une vue en coupe d'une tige arrière de manoeuvre (61) et de son attache A la lame arrière (9A/B).
- la figure 9 est une vue partielle d'une tige avant de manoeuvre (16) où l'on voit notamment le piston (22) assurant la manoeuvre de la tige sous l'effet du fluide pouvant être envoyé de part et d'autre dudit piston.
- la figure 10 est une vue en coupe de la gaine avant de manoeuvre (1) servant à contenir la tige avant de manoeuvre (16), ladite gaine contenant également des canalisations fluidiques (17/18).
- la figure 10A est une vue en coupe de la gaine avant de manoeuvre (1) contenant ladite tige avant de manoeuvre (16).
- la figure 11 est une vue en coupe des différents éléments constituant une gaine avant de manoeuvre (5), dans la zone d'entraînement de la lame d'essuyage (10).

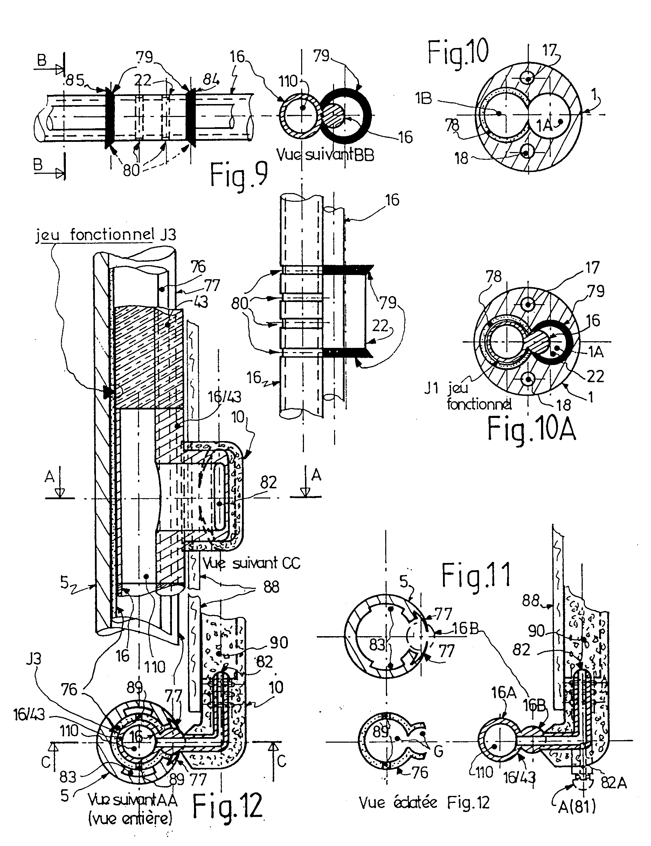

- la figure 12 est une vue en coupe de l'ensemble de la gaine avant de manoeuvre (5) dans laquelle est manoeuvrée la tige avant de manoeuvre (16)avec son embout de raccordement à la lame d'essuyage (16/43), et montrant essentiellement le principe d'étanchéité permanent assuré par deux lames semi-élastiques fixes (77) contre un cylindre mobile (16B) et montrant également le principe de guidage et de reprise d'effort de ladite tige avant de manoeuvre (16 et 43) dans ladite gaine avant (5), ainsi que la canalisation (82) assurant la liaison entre le creux (90) de la lame avant (10) et le centre (110) desdites tiges avant de manoeuvre.
- la figure 13 est une vue d'une lame d'essuyage possible (10), donnée à titre d'exemple non limitatif, et capable d'assurer l'aspiration ou l'aspersion sur le pare-brise.
- la figure 14 montre schématiquement le principe de la complicité réalisée entre la lame d'essuyage (10), la vitre (88) et les particules se trouvant sur la vitre.
- la figure 15 est une vue en coupe du corps de synchronisateur (2) des tiges avant de manoeuvre (16).
- la figure 16 est une vue extérieure du piston synchronisateur (42) des tiges avant de manoeuvre (16) et se logeant (107) dans ledit corps du synchronisateur (2).
- la figure 17 est une vue en coupe du piston du synchronisateur (42) des tiges avant de manoeuvre (16) équipé de deux clapets anti-retour auto-nettoyants (20A/B et 21A/B) et tarés dans les deux sens de passage.
- la figure 18 est une vue en coupe de l'électrovanne réversible (34) équipée de deux clapets anti-retour (112A/B)auto-nettoyants et tarés dans les deux sens de passage, et assurant avec ledit synchronisateur (42) des tiges avant de manoeuvre (16), la fonction "aspiration par la lame".
- la figure 18A montre l'autre position de ladite électrovanne (34), dans la configuration où avec ledit piston synchronisateur (42), la fonction "aspersion" par la lame est réalisée.
- la figure 19 montre une des configurations possibles et non limitatives, où les fonctions élémentaires constitutives du mécanisme, objet de la présente invention, peuvent être interverties comme l'on voit ici à titre d'exemple, un organe de manoeuvre unique (121) en pavillon de véhicule.
- la figure 20 montre une forme possible où l'organe unique (126) de manoeuvre est circulaire, à titre d'exemple non limitatif.
- la figure 21 montre une autre configuration possible (121) et non limitative de la chaîne cinématique du mécanisme, objet de l'invention.
- les figures 22 et 23 sont une autre configuration et implantation possibles (121) et non limitative de la chaîne constitutive du mécanisme objet de l'invention.
- la figure 24 montre un schéma d'une configuration possible (121) et non limitative du mécanisme objet de l'invention et où la lame d'essuyage (10) se déplace horizontalement, ladite lame étant normalement verticale.
- la figure 25 est une vue schématique en perspective d'un véhicule automobile montrant une option possible et non limitative du mécanisme objet de l'invention, et où une lame d'essuyage (136) peut être adjointe latéralement, de telle sorte que le déplacement de la lame avant (10) assure en même temps le déplacement d'une ou plusieurs autres lames auxiliaires d'essuyage.
- la figure 26 est une vue en coupe très partielle où l'on voit l'effet de jointage et de juxtaposition du mécanisme (16/43 et 5), objet de l'invention, et celà dans la zone de déplacement de la lame (10) sur le pare-brise 11, par rapport à la bordure de portière (156B) par exemple.
- la figure 27 est une vue schématique en perspective d'un véhicule automobile où, à titre d'exemple non limitatif, l'on voit une des possibilités du montage et de l'adaptation du mécanisme, objet de la présente invention, et se présentant sous la forme d'un FAISCEAU complet, assurant la fonction de joint supérieur d'étanchéité entre le pavillon, les montants dudit pavillon et les portières dudit véhicule.
- la figure 28 montre une des possibilités du montage de la gaine arrière de manoeuvre (8) eau droit de la lunette arrière (12), entre la vitre (12) et le montant de ladite vitre (162).
- la figure 29 montre la fonction "joint d'étanchéité" (7) entre le pavillon (160) et les hauts de portières (156A/163A).
- la figure 30 montre la possibilité d'un montage hybride de la présente invention, et où l'on voit que les gaines avant (5) et arrière (8) de manoeuvre peuvent être collées sur les pare-brises (11 et 12) et, les gaines auxiliaires de manoeuvre (7) passées en pavillon (160), à la jointure des tôleries du véhicule, ceci donné à titre d'exemple non limitatif.
- la figure 31 montre la vue en coupe de la gaine auxiliaire (7) au droit dudit joint de tôlerie.
- la figure 32 montre la gaine de manoeuvre (5/8) collée sur ladite vitre.

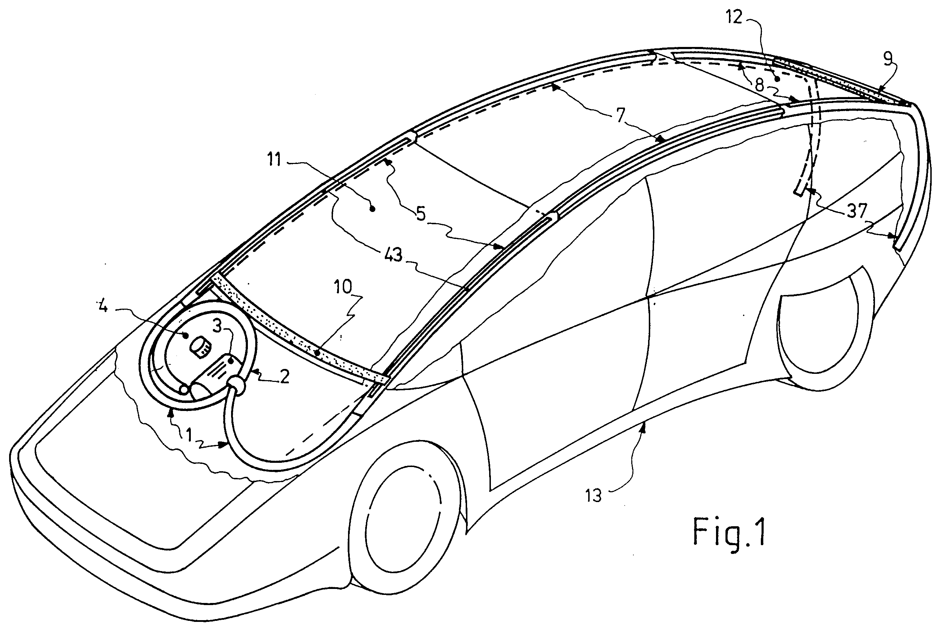

En se référant au dessin, on voit un dispositif, conforme à l'invention, installé sur un véhicule 13 fig.1, et où une lame avant 10 est tendue au-dessus d'un pare-brise avant 11, et où une lame arrière 9 est tendue au-dessus d'une custode 12, dudit véhicule 13.

Le pare-brise avant 11 fig.1 est bordé, sur chacun de ses deux côtés latéraux, d'une gaine avant de guidage 5, ladite gaine étant constituée par une forme de contenance 5 fig.11, à l'intérieur de laquelle se trouve un matériau reconstitué 76, assurant à la fois le guidage, l'étanchéité, le maintien mécanique, la lubrification, ainsi que d'autres avantages non limitatifs, de la tige avant de manoeuvre 16, 16/43 et 43.

La tige avant de manoeuvre 16, 16/43 et 43 fig.12 logée dans la forme G fig. 11, de la pièce de guidage 76 assure l'étanchéité permanente de la gaine avant 5, de telle sorte que deux lames élastiques 77, contraintes grâce au positionnement de la partie cylindrique 16B, les deux dites lames élastiques assurent un contact tangent permanent avec la génératrice 16B de ladite tige avant de manoeuvre 16, 16/43 et 43 et cela suivant tout son axe longitudinal.

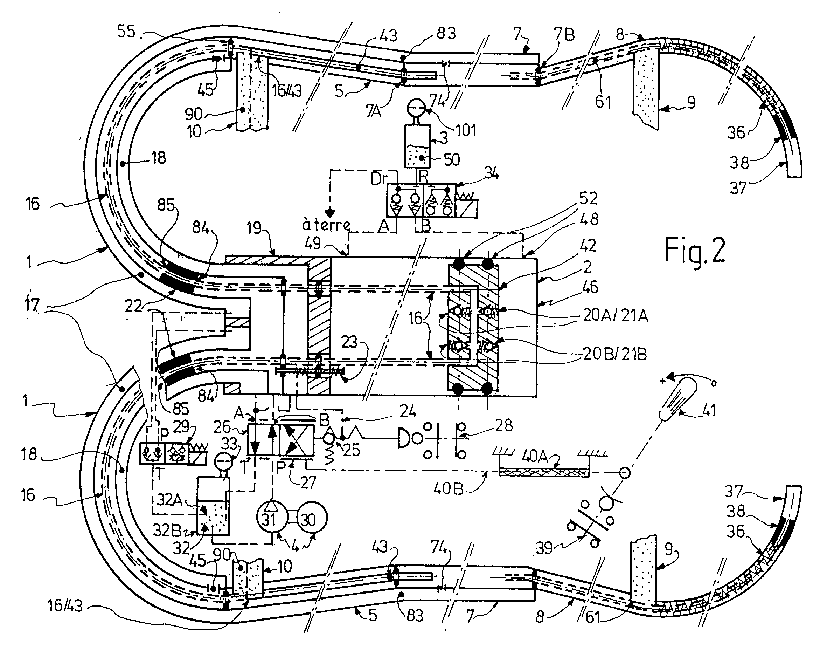

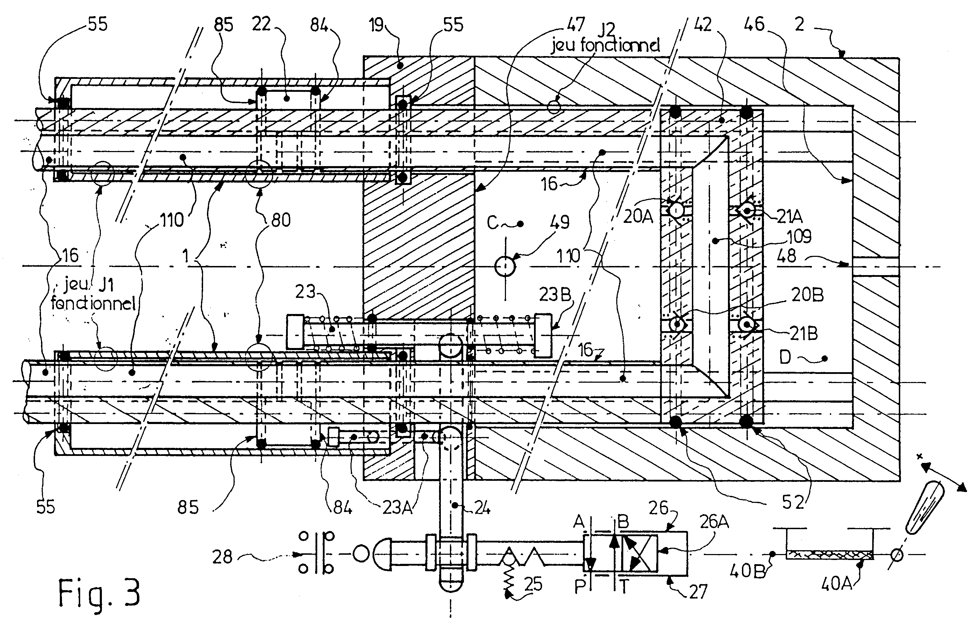

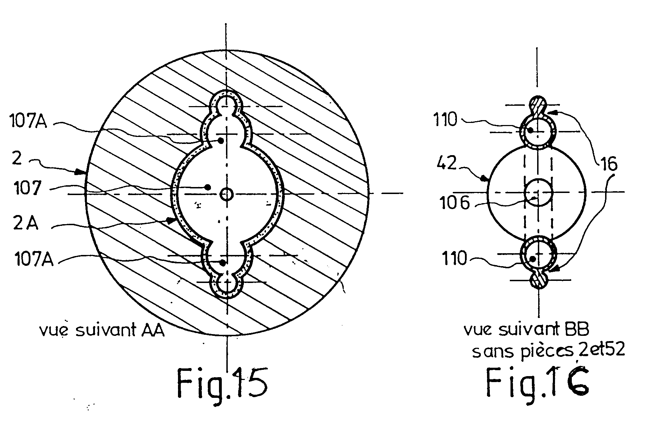

Ladite tige avant de manoeuvre 16 fig.9, de structure rigide mais flexible suivant son axe longitudinal, est manoeuvrée grâce au piston 22 équipé de ses joints d'étanchéité 79, et grâce aux cannelures 80, ledit piston 22 étant solidaire de ladite tige avant de manoeuvre 16. Sous l'effet de fluide sous pression refoulé par le groupe électro-compresseur 4, constitué d'un moteur électrique 30 entraînant un compresseur 31, ledit fluide étant acheminé d'un côté 84 ou 85 fig.3, ou de l'autre côté 85 ou 84 dudit piston 22 de la tige avant de manoeuvre 16, alors que ledit fluide est contenu dans le corps creux 1A fig.10 et que le jeu fonctionnel entre la tige avant de manoeuvre 16 et le corps creux 1B fig.10 est de telle sorte qu'il permette le coulissement axial de ladite tige sans que le fluide 32 fig.2 envoyé sous pression sur l'une des faces 84 ou 85 fig.3, dudit piston de manoeuvre 22 ne passe sur la face opposée 85 ou 84 dudit piston 22. La combinaison de la tige avant de manoeuvre 16 fig. 3, équipée de son piston de manoeuvre 22 dans le corps creux 1A, constitue un vérin flexible suivant son axe longitudinal et à double tige Fig. 3, de telle sorte que la tige 16 soit en permanence contenue et guidée par la forme intérieure 1B du corps 1 fig. 10A. Le fluide refoulé par le compresseur 31 fig. 2 est acheminé sur l'orifice P du distributeur bi-stable à manoeuvre mécanique 26, ledit distributeur 26 étant positionné au-travers d'une tige de manoeuvre 24 fig. 3, qui est poussée dans l'autre sens par la tête de synchronisation 42, ladite tête 42 étant un piston de forme particulière fig. 16 et coulissant dans un corps creux 107 fig. 15, grâce à un joint d'étanchéité 52, de telle sorte que lesdites tiges avant de manoeuvre 16 restent contenues suivant leur axe longitudinal dans les formes de contenance 107A, fig. 15.

Une des extrémités de chaque tige avant de manoeuvre 16 fig. 3 est solidaire de ladite tête de synchronisation 42, de telle sorte que les deux tiges avant de manoeuvre se déplacent simultanément, malgré que chacun desdits circuits de manoeuvre des tiges avant de manoeuvre 16 puisse avoir un rendement différent de l'autre. Ainsi, le tiroir 26A dudit distributeur 26 fig.3 est positionné mécaniquement grâce aux positions extrêmes des tiges avant de manoeuvre 16, de telle sorte que le fluide 32 fig. 2, refoulé par le compresseur 31, envoie de la pression soit sur chacune des faces 84 fig. 3 desdits pistons de manoeuvre 22, tandis que chacune des faces 85 desdits pistons 22 est à la vidange, soit sur chacune des faces 85 tandis que chacune des faces 84 desdits pistons 22 est à la vidange, au-travers dudit distributeur 26.

Cet ensemble de deux tiges avant de manoeuvre 16 fig.9, solidarisées à un piston 42 fig.3, coulissant dans un corps creux 107 fig.15, lesdites tiges 16 fig.9, guidées et coulissantes suivant leur axe longitudinal dans les corps creux de forme 1A/1B fig.10A, sous les effets du fluide refoulé par le compresseur 31 fig.2, au-travers du distributeur bi-stable 26, permet d'assurer le déplacement alternatif et simultané des deux dites tiges avant de manoeuvre 16 fig.2.

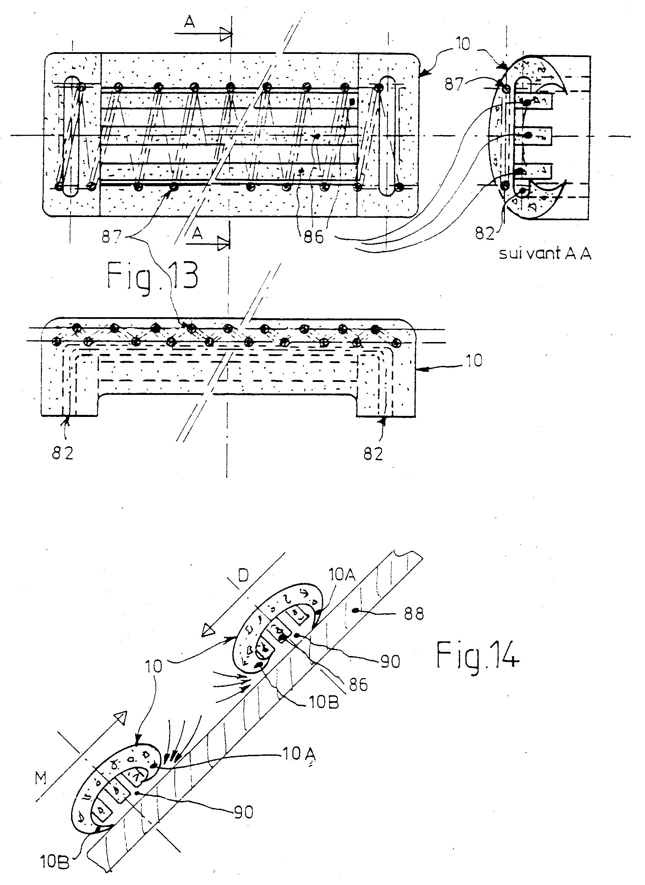

A l'autre extrémité de chacune desdites tiges avant de manoeuvre 16 fig.12, entièrement solidaire de ladite tige se trouve une pièce 16/43, ladite pièce étant réalisée avec un matériau offrant des caractéristiques de dureté et de glissement optimum, ladite pièce 16/43 étant dans le prolongement de chacune desdites tiges avant de manoeuvre 16, assure l'attache à la lame d'essuyage 10 fig.12, ladite lame d'essuyage étant tendue d'une manière semi-élastique entre les deux pièces 16/43 fig.2, grâce à la structure alvéolaire et élastique du matériau qui constitue ladite lame 10 fig.13, et grâce au ressort de tension 87 assurant la raideur suffisante à la lame d'essuyage 10, de telle sorte qu'à tout moment au cours de son déplacement sur le pare-brise 11 fig.1, ladite lame 10 joue le rôle qui est représenté schématiquement fig. 14, de telle sorte que les particules récupérées par ladite lame 10 fig.14, lors de son passage sur le pare-brise 88, lesdites particules sont collectées à l'intérieur 90 de ladite lame d'essuyage 10.

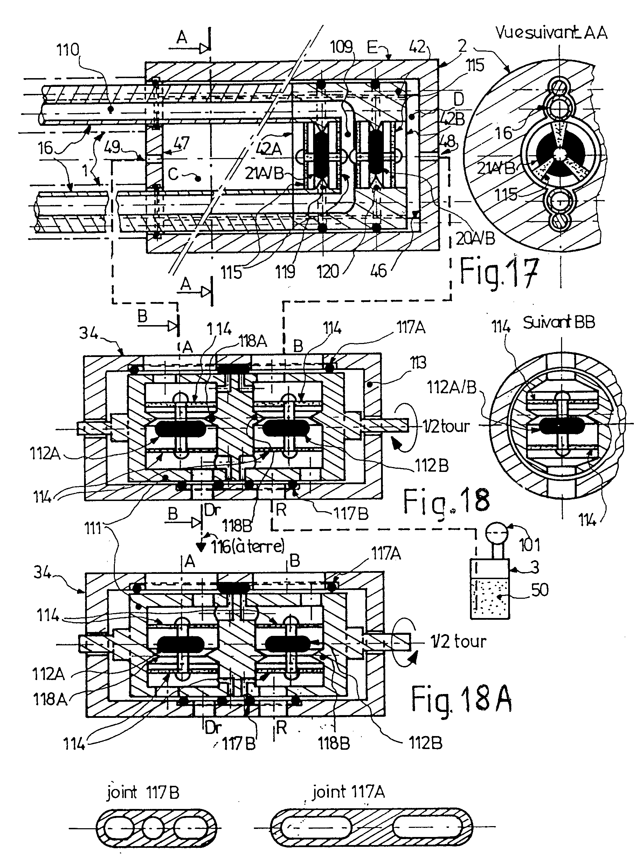

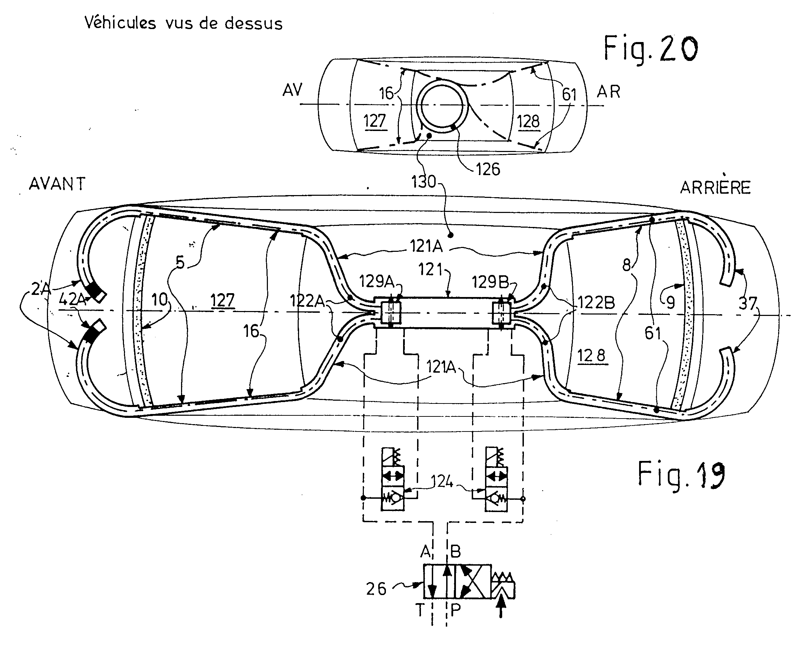

La lame d'essuyage 10 fig. 13 est dotée en outre de certaines formes 86, données ici à titre d'exemple non limitatif, dont le rôle est de réaliser certaines canalisations fluidiques entre ladite lame 10 fig. 14 et le pare-brise 88. La dite lame d'essuyage 10 fig. 13 est une des innovations, objet de la présente invention, donnée ici à titre d'exemple non limitatif, de telle sorte que la complicité réalisée entre ladite lame 10 fig. 14 et le pare-brise 88, assure une étanchéité relative permettant de réaliser une enceinte, de telle sorte que ladite enceinte assure la collecte des particules se trouvant sur le passage de ladite lame 10, lors de son déplacement sur le pare-brise 88. La tête de synchronisation 42 fig.3 coulisse dans le corps creux de forme 107 fig.15, sous l'effet du déplacement desdites tiges avant de manoeuvre 16 fig.3, manoeuvrées par le fluide de manoeuvre provenant du compresseur 31 fig.2, ladite tête 42 fig.3 étant équipée de joints 52, de telle sorte que son déplacement assure une parfaite étanchéité à la pression et à la dépression créées lors du déplacement relatif dudit piston 42 fig. 3 dans sa chambre 107 fig. 15 par rapport aux fonds 46 et 47 fig. 3 desdites chambres du corps de synchronisateur 42. Sur chacun desdits fonds de chambre 46, 47 fig. 17, se trouve un orifice 48/49 raccordé chacun à un orifice distinct, respectivement B et A du distributeur à clapet à commande électrique 34. En position repos fig. 18, cet électro-distributeur 34 met chaque orifice 48/49 en communication avec un clapet anti-retour 112A/112B. En l'absence d'effet physique interne, ledit clapet se décolle de son siège 118A/118B, grâce à un équilibrage par double ressort à lamelles 114 dudit clapet 112A/112B. Donc, dans ladite position repos de l'électro-distributeur 34 fig. 18, la tête de synchronisation 42 fig. 17, déplacée, par exemple sur la gauche sous l'effet de la sortie des tiges avant de manoeuvre 16, comprime le volume de la chambre C qui se rétrécit contre la face 42A dudit piston 42 et le fond 47 de la chambre C, de telle sorte que le clapet taré 21A/B reste sur son siège 119 obligeant ledit volume C comprimé, à être évacué à terre, au-travers du clapet 112A fig. 18, par l'orifice Dr du distributeur 34, via les orifices 49 fig. 17 et A fig. 18. La chambre opposée D fig. 17, dudit piston 42 déplacé sous ledit effet de sortie desdites tiges avant de manoeuvre 16, augmente de volume entre la face 42B dudit piston 42 et le fond de chambre 46, de telle sorte que le clapet 20A/B reste sur son siège 120, obligeant ledit volume D se détendant, à créer une dépression de telle sorte que le clapet taré 112B fig. 18 est aspiré et se positionne alors sur son siège 118B, de telle sorte que ledit volume D fig. 17 se détende de plus en plus, de telle sorte que le clapet anti-retour 20A/B soit aspiré et se décolle de son siège 120, mettant en communication le collecteur 109 sur lequel sont raccordées les deux tiges creuses 110 avant de manoeuvre 16, de telle sorte que ladite dépression ainsi créée aspire dans lesdites tiges creuses 110 qui sont creuses jusqu'à leur raccordement à la tête de fixation 16/43 fig. 12 de la lame 10 fig. 14, ladite tête 16/43 fig. 12 étant également creuse 82, de telle sorte que ladite dépression se crée dans le creux 90 fig. 14 de la lame d'essuyage 10, de telle sorte que les particules collectées par ladite lame 10 à la surface du pare-brise 88, sont aspirées dans ladite chambre D fig. 17, en dépression créée entre la face 42B du piston 42 et le fond de chambre 46. Lorsque les tiges avant de manoeuvre 16 fig. 2 inversent le mouvement précédemment décrit, sous l'effet d'inversion du fluide 32 sur les têtes de piston 22, le piston synchronisateur 42 fig. 20 se déplace en sens inverse de celui décrit précédemment, la chambre en dépression D se mettant sous pression de telle sorte que lesdites particules précédemment aspirées et contenues dans ladite chambre D au moment de l'inversion dudit mouvement, se trouvent évacuées comme décrit précédemment pour la chambre C. La chambre ayant été sous pression C fig. 17 précédemment, passant elle en phase de dépression, donc d'aspiration tel que décrit précédemment pour la chambre D.

Le processus de fonctionnement ainsi décrit, et objet de la présente invention, montre que, durant le déplacement des tiges avant de manoeuvre 16 fig. 2, le déplacement du piston synchronisateur 42 fig. 17 desdites tiges 16, dans sa chambre 107 fig. 15, provoque une aspiration quasi permanente dans le creux 90 fig. 14 de la lame avant 10 et, un rejet à terre permanent 116 fig. 18 des particules ainsi aspirées dans le creux 90 fig. 14, de ladite lame avant 10. Le déplacement dudit piston 42 fig. 2 dans sa chambre 107 fig. 15 réalise une pompe monopiston E fig. 17. Ladite pompe E a donc une première fonction, en combinaison avec l'électro-distributeur 34 fig. 18 en position repos, de telle sorte que les particules collectées par la lame 10 fig. 14 au cours de son déplacement sur le pare-brise 88 sont aspirées par ladite lame, et évacuées sous le véhicule par l'orifice Dr (116) fig. 18 de l'électro-distributeur 34. En mettant sous tension l'électro-distributeur 34 fig. 2, les deux clapets anti-retour (112 A/B) qui permettaient dans ladite position repos dudit électro-distributeur l'évacuation des particules aspirées sur le pare-brise 88 fig. 14, lesdits clapets s'inversent fig. 18A, et permettent un libre passage entre le réservoir 3 rempli de liquide de lavage 50, et les chambres C et D fig. 17 de ladite pompe E précédemment décrite, lesdits clapets 112A/112B empèchant alors toute circulation fluidique entre ladite pompe E et ledit réservoir 3 lorsque les chambres C ou D sont sous pression.

Dans ladite position où l'électro-distributeur 34 fig. 18 est excité, les deux clapets 112A/112B se retrouvent inversés fig. 18A, par la rotation d'un demi-tour du tiroir 111 dans sa chemise 113, de telle sorte que sans aucun effet physique interne, le liquide contenu dans le réservoir 3 se trouve en communication directe avec les chambres C et D fig. 17, de ladite pompe E, au-travers de l'orifice R fig. 18 de l'électro-distributeur 34, via les orifices A et B et des orifices 48 et 49 fig. 17. Lorsque le piston synchronisateur 42 fig. 17 se déplace dans la chambre 107, fig. 15, de telle sorte que le volume C fig. 17, compris entre la face 42A dudit piston 42 et le fond de la chambre 47 diminue, il y a compression dudit volume C et, le fluide contenu est évacué sur l'orifice A du distributeur 34 fig. 18A, de telle sorte que le clapet 112A, taré grâce à ses lames à ressort 114, ledit clapet 112A se retrouve poussé et se plaque sur son siège 118A. Ledit volume C, comprimé est donc emprisonné et continue à monter en pression jusqu'à ce que le clapet anti-retour 21A/B fig. 17, a double tarage grâce à ses lames à ressort 115, ledit clapet 21A/B étant poussé et décollé de son siège, cela permet l'évacuation dudit volume C fig. 17 ainsi comprimé, qui s'évacue alors dans le collecteur 109, sur lequel sont raccordées les tiges creuses 110 fig. 12, communiquant avec le creux 90 fig. 14 de la lame d'essuyage 10. Ainsi dans cette dite phase, il y a envoi du volume comprimé C fig. 17, dans ladite pompe E, vers le creux 90 fig. 14 de la lame d'essuyage 10.

Pendant cette phase de compression ainsi décrite, le côté opposé 42B du piston synchronisateur 42 fig. 17, s'éloigne du fond 46 de la chambre 107 fig. 15, de telle sorte que le volume de la chambre D fig. 17 augmente, aspirant au-travers de l'orifice B fig. 18A de l'électro-distributeur 34, le liquide 50 contenu dans le réservoir 3 fig. 18, via l'orifice R dudit distributeur 34. Ledit volume D fig. 17, de ladite pompe E se remplissant du liquide 50 fig. 18, contenu dans ledit réservoir 3.

Lorsque le mouvement des tiges avant de manoeuvre fig. 3 est inversé grâce au circuit fluidique 32 fig. 2 agissant sur les pistons 22 fig. 3, le déplacement du piston synchronisateur 42 fig. 17 est également inversé, de telle sorte que ladite chambre C, précédemment décrite comprimée et ayant évacué son volume dans le creux 90 fig. 14 de la lame 10, ladite chambre C fig. 17 se met en dépression, donc à aspirer à son tour le liquide 50 fig. 18 contenu dans le réservoir 3, et ladite chambre D fig. 17 évacue son volume dans le creux 90 fig. 14 de la lame 10.

Donc, en excitant l'électro-distributeur 34 fig. 2, la pompe E fig. 17, précédemment décrite, assure l'envoi quasi permanent et alternatif sous pression du liquide 50 fig. 18 contenu dans le réservoir 3, de telle sorte que ledit liquide 50 reste contenu dans le creux 90 fig. 14 de la lame 10 et cela, dans les deux sens de déplacement des tiges avant de manoeuvre 16 fig. 17, donc dans les deux sens de déplacement de la lame avant 10 fig. 14.

L'excitation de l'électro-distributeur 34 fig. 2 est réalisée par un séquenceur électrique, de telle sorte qu'il y a une combinaison judicieuse d'envoi du liquide de lavage 50 fig. 18 du réservoir 3, et une réaspiration de ce liquide chargé, dans le creux 90 fig. 14 de la lame 10, de telle sorte que ledit liquide chargé est évacué au sol, sous le véhicule 13 fig. 1, lorsque le distributeur 34 fig. 2 est désexcité, via l'orifice Dr (116) fig. 18 et les orifices A et B. De manière à rendre immédiatement opérationnel, l'effet d'aspersion de fluide de nettoyage 50 fig. 18, dans le creux 90 fig. 14 de la lame 10, dès que l'on donne l'ordre d'arrêt au système de manoeuvre 41 fig. 2, de la lame avant 10, l'automatisme électrique de commande dudit système assure le retour en position repos de la lame avant 10, de telle sorte que le volume C fig. 17 se remplisse de liquide de lavage 50 fig. 18, tel que décrit précédemment.

Les clapets anti-retour 20A/B et 21A/B fig. 18, utilisés sur le piston synchronisateur 42 de la pompe E, et les clapets anti-retour 112A/B fig. 18, utilisés dans l'électro-distributeur 34 sont de telle sorte qu'ils sont à effet auto-nettoyant, de telle sorte qu'au cours de leur déplacement fonctionnel, lesdits clapets 20A/B, 21A/B se frottent contre leur siège respectif 120, 119 et que les clapets 112A et 112B se frottent contre leurs sièges respectifs 118A/118B, de telle sorte que les surfaces en contact se nettoient mutuellement, tout en assurant leur fonction d'étanchéité entre lesdits clapets et leurs dits sièges respectifs. Par ailleurs, le liquide de nettoyage 50 fig. 18, contenu dans le réservoir 3, circule par le circuit d'aspiration décrit plus haut, dudit fluide provenant du creux 90 fig. 14 de la lame 10, de telle sorte qu'il assure le nettoyage complet du circuit ainsi constitué et décrit plus haut.

En résumé, le piston synchronisateur 42 fig. 17, coulissant dans sa chambre 107 fig. 15, constitue une pompe quasi permanente alternative, sous l'effet du déplacement des tiges avant de manoeuvre 16. Cet effet de pompage quasi permanent alternatif assure l'aspiration quasi permanente, dans le creux 90 fig. 14 de la lame 10, lorsque l'électro-distributeur 34 fig. 2 est au repos, et assure l'envoi de liquide 50 fig. 18A dans le creux 90 fig. 14 de la lame 10, lorsque l'électro-distributeur 34 fig. 2 est excité.

La lame avant 10 fig. 14 est réalisée, dans ses formes et matières, données ici à titre d'exemple non limitatif, de telle sorte qu'au cours de son déplacement sur le pare-brise 88, ladite lame 10 collecte les particules dans son creux 90, grâce à sa complicité avec ledit pare-brise 88, de telle sorte que sous l'effet de son déplacement lors de la montée M, de la lame 10, et, la lèvre supérieure 10A se décolle du pare-brise 88, et de telle sorte que lors de la descente D, de ladite lame 10, la lèvre inférieure 10B, sous lesdits mêmes effets, se décolle du pare-brise 88.

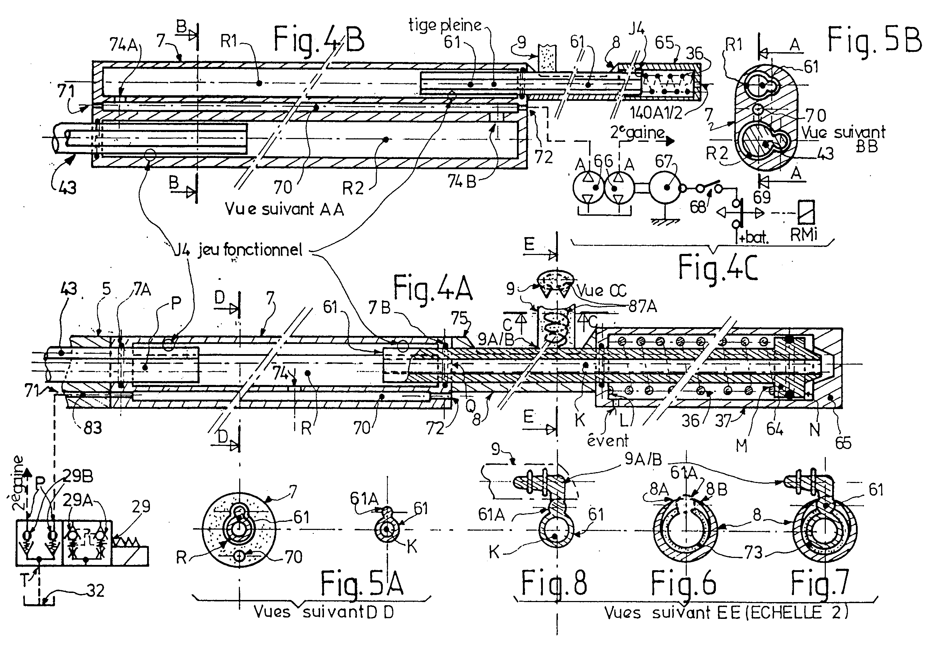

Afin d'assurer une étanchéité permanente des jeux fonctionnels existants entre la gaine avant de guidage 5 fig. 11, et la tige avant de manoeuvre 16 fig. 12, prolongée par la tête de raccordement 16/43 fig. 12, une tige avant auxiliaire 43 fig. 12, de forme rigoureusement identique ladite tige avant de manoeuvre 16 et 16/43, ladite tige auxiliaire 43, d'une longueur supérieure à la course des tiges avant de manoeuvre 16, assure donc la contenance totale et permanente de la chambre G fig. 11 lorsque la tige avant de manoeuvre 16 fig.12 est totalement vers le bas (lame d'essuyage 10 fig. 1 sous le capot du véhicule, tel fig. 1). La tige avant auxiliaire 43 fig.12, de structure rigide mais flexible suivant son axe longitudinal, au-delà de la gaine avant de guidage 5 fig.2, rentre dans la gaine auxiliaire 7 fig.4A, ladite gaine auxiliaire 7 étant solidaire de la gaine avant de guidage 5.

Le déplacement de ladite tige avant auxiliaire 43 fig.12 est donc provoqué par le déplacement da la tige avant de manoeuvre 16 et 16/43, de telle sorte que la tige avant auxiliaire se comporte comme un piston plongeur 43 fig.4A, faisant des allées et venues dans sa chambre R, appelée ici gaine auxiliaire 7.

Ladite gaine auxiliaire 7 fig.4A est à son autre extrémité, raccordée par une bague 75, à la gaine arrière de manoeuvre 8.

Ladite gaine arrière de manoeuvre 8 fig. 1, située de part et d'autre de la custode 12 du véhicule automobile 13, assure le déplacement d'une lame de nettoyage 9 attelée à chacune de ses extrémités à un point 9A/B fig.4A de chaque tige arrière de manoeuvre 61 fig.7 et fig.8, de structure flexible suivant son axe longitudinal. Chaque tige arrière de manoeuvre 61 fig.4A est creuse, au-moins dans sa partie la plus large K fig.8, de telle sorte que ladite tige 61 fig.4A étant introduite dans la gaine auxiliaire 7, le fluide contenu dans le volume R de ladite gaine auxiliaire 7, passe par le creux K de ladite tige arrière de manoeuvre 61 fig.7. L'extrémité arrière de ladite tige arrière de manoeuvre est équipée d'une tète de piston 64 fig.4A, ladite tête de piston guidée dans une gaine de protection 37, ladite gaine 37 étant solidaire de la gaine arrière de guidage 8.

Ladite tête de piston 64 fig.4A est en appui M sur un ressort à boudin 36, enroulé autour de la tige arrière de manoeuvre 61, ledit ressort 36 étant en appui opposé contre la face interne L de la gaine arrière de protection 37, de telle sorte que ladite tige de manoeuvre 61, le mécanisme objet de l'invention étant hors tension et normalement au repos, ladite tige 61 est sortie de la gaine auxiliaire 7, de telle sorte que le fond N du piston 64 se trouve en butée mécanique sur le fond opposé 65 de la gaine de protection 37, de telle sorte que la lame arrière 9 fig.4A est ramenée en position arrière, telle que représentée fig.1, par l'intermédiaire du ressort 36 fig. 4A, installé dans chaque gaine de protection 37 de chaque tige arrière de manoeuvre 61.

Chaque tige arrière de manoeuvre 61 fig. 4A étant creuse, lorsque la tige avant auxiliaire 43 pénètre dans la gaine auxiliaire 7, le fluide 32 fig.2, contenu dans le volume R fig.4A est poussé dans la partie creuse K fig.4A de la tige arrière de manoeuvre 61 jusqu'au fond 65 de la gaine de protection 37. Le ressort 36 maintenant l'écartement entre la surface L de la gaine arrière de protection 37 et la surface M de la tête de piston 64, ledit fluide ainsi comprimé doit s'évacuer par l'orifice 74, puis par la canalisation 70. Dans la configuration normale, l'orifice 72 fig.4A est obturé et l'orifice 71 raccordé, grâce à la gaine avant de manoeuvre 1 fig.10 et à sa canalisation 17, via la canalisation 83 fig.12 située dans la gaine avant de guidage 5, ledit orifice 71 fig.4A étant raccordé sur l'orifice P de l'électro-distributeur 29. L'électro-distributeur 29 n'étant pas sous tension, ledit fluide peut circuler librement de P vers T et de T vers P de telle sorte que, malgré les va-et-vient permanents de la tige avant auxiliaire 43 fig.4A dans la gaine 7, ledit fluide du volume R est refoulé au réservoir 32 lorsque ladite tige avant auxiliaire 43 rentre dans ladite gaine 7 et ledit fluide du volume R est réaspiré dudit réservoir 32 fig.2, lorsque ladite tige avant auxiliaire 43 fig.4A sort de ladite gaine auxiliaire 7, l'orifice T de l'électro-distributeur 29 fig.2 étant raccordé sour le niveau fluidique 32A fig.2 du fluide général 32. L'électro-distributeur 29 fig.2 est mis sous tension au moment opportun, grâce au détecteur de fin de course 28, de telle sorte que le tiroir dudit électro-distributeur 29 est déplacé, le clapet anti-retour taré 29A fig.4A se positionnant entre les orifices P et T, de telle sorte que lorsque la tige avant auxiliaire 43 commence son introduction dans la gaine 7, le fluide 32 fig.2 ainsi comprimé dans la chambre R fig.4A s'introduise sous pression dans la canalisation K de la tige arrière de manoeuvre 61, ladite pression s'exerçant entre le fond 65 de la gaine arrière de protection 37 et la surface N du piston 64, de telle sorte que la tige arrière de manoeuvre 61 soit poussée à rentrer dans la gaine auxiliaire de manoeuvre 7 de telle sorte que la lame 9 fig.1 monte sur la custode arrière 12, provoquant également la compression du ressort 36 fig.4A. Lorsque le ressort 36 fig.4A est totalement comprimé entre les faces L et M, ledit fluide 32 fig.2 continue à monter en pression sous l'effet de piston provoqué par la tige auxiliaire 43 fig.4A, qui en général n'a pas terminé sa course dans la chambre R, de telle sorte que le clapet anti-retour taré 29A de l'électro-distributeur 29 est décollé de son siège et ledit fluide excédentaire dudit volume est évacué avec le fluide général 32 fig.2.

Lorsque les tiges avant de manoeuvre 16 fig.2 ont effectué leur course complète, et qu'ainsi la lame 10 est montée jusqu'à la partie supérieure du pare-brise 11, le retour de ladite tige 16 provoque bien sûr le retrait de la tige avant auxiliaire 43 fig.4A de la gaine auxiliaire de manoeuvre 7, de telle sorte que ledit fluide du volume R est décomprimé et que la veine R dudit fluide est tirée de telle sorte que cet effet de succion de ladite veine R attire la face N fig.4A du piston 64 contre le fond de la gaine de protection 65, sous l'effet accompagnateur du ressort 36 qui repousse la face M du piston 64 de la face L de la gaine de protection 37.

La mise sous tension de l'électro-distributeur 29 fig. 4A est faite judicieusement par un séquenceur électrique permettant de cadencer, au gré du conducteur, l'essuyage de la custode 12 fig. 1 par la lame 9, par rapport à l'essuyage du pare-brise 11 par la lame 10 du véhicule 13.

Les deux tiges auxiliaires 43 fig. 4A se déplaçant simultanément dans les deux sens, l'effet de piston précédemment décrit assure le déplacement simultané des deux tiges arrière de manoeuvre 61. Ladite gaine auxiliaire de manoeuvre 7 fig. 4A est soit constituée d'un seul canal de guidage R fig. 70, dans le cas où la longueur de ladite gaine auxiliaire de manoeuvre permette de contenir en même temps, lorsqu'elles sont introduites au maximum dans ladite gaine 7, la tige auxiliaire 43 et la tige arrière de manoeuvre 61.

Lorsque ladite gaine auxiliaire de manoeuvre 7 fig. 4A ne peut, comme décrit ci-dessus, contenir lesdites tiges 43 et 61 à la fois, la gaine auxiliaire de manoeuvre possède deux canaux juxtaposés R1/R2 fig. 4B, distincts mais communiquants par les orifices 74A et 74B, de telle sorte que le fonctionnement ci-dessus exposé, concernant la fonction active de la gaine auxiliaire de manoeuvre 7 fig. 4A, soit maintenu.

Dans le cas où le véhicule 13 fig. 1 possède un système d'essuyage arrière indépendant, l'orifice 74B fig. 4B de la gaine auxiliaire 7, est obturé tandis que l'orifice 72 peut être raccordé, à titre d'exemple non limitatif, à un groupe électro-compresseur-moteur réversible 66/67 fig. 4C, le moteur 67 étant mis sous tension par le contact 68, ledit moteur 67 entraîne simultanément les deux compresseurs-moteurs 66 ayant chacun une cylindrée de telle sorte que le fluide envoyé par A et par B rentre par chaque orifice 72 de la gaine auxiliaire 7 fig. 4B, puis soit canalisé par le canal 70 puis par l'orifice 74A fig. 4B, ledit fluide agissant par effet de pression provoquant le phénomène identique à celui provoqué par l'introduction de la tige auxiliaire 43 dans la gaine 7, de telle sorte que chaque tige arrière de manoeuvre 61 se déplace tel que décrit précédemment d'une manière rectiligne et uniforme. Lorsque le ressort 36 est totalement comprimé, ou que la tige arrière de manoeuvre 61 fig. 4A arrive en butée maximum, le contact électrique 69 fig. 4C s'ouvre sous l'effet de montée en intensité du moteur électrique 67, ledit contact 69 étant temporisé au travail à la retombée de son relais de commande RMi, de telle sorte que ledit contact 69 ne se referme qu'après un certain temps durant lequel, au moins, les deux compresseurs-moteurs 66 ne sont plus entraînés par le moteur électrique 67, de telle sorte qu'ils n'ont plus de couple les immobilisant en rotation. Lesdits compresseurs-moteurs 66 sont réversibles, de telle sorte qu'ils reçoivent la pression fluidique créée entre la face N fig. 4A du piston 64 et la face 65 de la gaine de protection 37, sous l'effet du ressort 36 qui se trouve comprimé et qui alors devient générateur, de telle sorte que ledit ressort repousse le piston 64 vers le fond 65 de la gaine de protection 37, de telle sorte que ledit fluide contenu dans le volume R est refoulé sur les orifices A et B fig. 4C de chaque compresseur-moteur 66, ledit compresseur-moteur tournant en sens inverse, c'est-à-dire en récepteur-moteur. De cette manière, le retour de la lame arrière 9 fig. 4A est provoqué par la détente du ressort 36, de telle sorte que sous l'effet du fluide contenu dans le volume R, et généré par le piston 65, le groupe électro-compresseur-pompe 66/67 fig. 4C assure la synchronisation, de telle sorte que les deux tiges arrière de manoeuvre 61 fig. 4A se déplacent simultanément durant leur phase de retour.

Il est bien évident que lorsque le système d'essuyage arrière fig. 4A est totalement dissocié du système d'essuyage avant fig. 16, chacun desdits systèmes doit avoir une gaine auxiliaire 7 fig. 4A qui lui est propre.

La lame arrière 9 fig. 4A peut être beaucoup plus traditionnelle, comme le montre sa vue en coupe CC, donnée à titre d'exemple non limitatif.

La gaine auxiliaire 7 fig. 5A a une forme creuse R correspondant rigoureusement aux formes extérieures de la tige avant auxiliaire 43 fig. 4A et de la tige arrière de manoeuvre 61, de telle sorte que le jeu fonctionnel entre la forme creuse R et lesdites tiges 43 et 61 permette juste le déplacement desdites tiges 43 et 61 suivant leur axe longitudinal. Les joints 7A et 7B fig. 4A assurent l'étanchéité des tiges avant de manoeuvre 43 et des tiges arrière de manoeuvre 61 par rapport à la gaine auxiliaire 7.

La gaine arrière de manoeuvre 8 fig. 6, de la tige arrière de manoeuvre 61 fig. 8, contient, grâce à un matériau 73 fig. 6/7, offrant les meilleurs compromis de dureté et de coulissement, ainsi que d'autres avantages non limitatifs de la présente invention, ledit guide 8 fig. 6 contient donc la tige de manoeuvre 61 fig. 8, de telle sorte que les lèvres semi-élastiques 8A/8B, contraintes sous l'effet du positionnement de la tige arrière de manoeuvre 61A fig. 6, assurent l'étanchéité permanente contre la partie cylindrique 61A fig. 6 de la tige arrière de manoeuvre 61 fig. 8 et cela suivant tout son axe longitudinal,
Un des avantages de la présente invention, donné ici à titre d'exemple non limitatif, est représenté sur le schéma de la figure 2, où l'on voit un dispositif de laminage quelconque 26/27, de telle sorte qu'une partie du fluide soit évacué du circuit fluidique de manoeuvre de telle sorte que la vitesse de manoeuvre soit réglable, et cela grâce à un positionnement relatif entre le tiroir 26 fig. 2 du distributeur 26 et sa chemise 27 qui peut être positionnée à volonté, grâce à une commande à distance 40A et 40B, telle qu'elle est représentée ici à titre d'exemple non limitatif, ladite commande. composée d'une gaine 40A au-travers de laquelle coulisse un filin d'acier 40B, à partir du levier de commande de l'essuie-glace 41, situé au tableau de bord du véhicule 13 fig. 1.

Ainsi, un des avantages de la présente invention, donné ici à titre d'exemple non limitatif, ledit avantage permettant de dévier tout ou partie du fluide de manoeuvre 32 fig. 2, de telle sorte que la vitesse de déplacement des tiges avant de manoeuvre 16 fig. 2, soit réglable manuellement ou par un système automatique, de telle sorte que les lames de nettoyage 10 et 9 aient la vitesse de déplacement.

Les gaines de manoeuvres 1 fig. 10 sont des gaines complexes, de telle sorte qu'elles permettent, dans leur zone centrale 1A/1B, de notamment, contenir, guider, assurer la manoeuvre des tiges avant de manoeuvre 16 fig. 9, lesdites gaines complexes assurant, grâce à leur canalisation 17 fig. 10, la canalisation du fluide contenu entre la tige auxiliaire 43 fig. 4A, et la gaine auxiliaire 7, et grâce à leur canalisation 18 fig. 10, de permettre l'alimentation de la face 85 fig. 2, du piston 22 assurant la manoeuvre de retour des tiges avant de manoeuvre 16 grâce à leur orifice 45.

Les gaines avant de manoeuvre 5 fig. 11 contiennent également la canalisation 83 fig. 12 permettant de canaliser le fluide de manoeuvre 32 fig. 2, ledit fluide de manoeuvre étant véhiculé tel que décrit précédemment de la chambre R fig. 4A comprise entre la gaine auxiliaire 7 et la tige auxiliaire 43 jusqu'à l'orifice P de l'électro-distributeur 29, Le dispositif objet de la présente invention montre que le déplacement de la lame de nettoyage 10 et 9 fig. 1 est assuré par des tiges 16 fig. 9 et 61 fig.4A coulissant dans des gaines 1 fig. 10 et 65 fig. 4A, à section fermée ou dans des gaines 5 fig. 11, 8 fig. 6 et 107A fig. 15 à section ouverte de telle sorte que lesdites tiges 16 fig. 2 et 61 fig.5B étant soumises à des contraintes physiques d'origine mécanique, lesdites tiges 16, 16/43, 43 et 61 restent contenues physiquement dans leurs dites gaines respectives 107A, 1, 5,5, 7, 8 et 65 qui les contiennent, bien que lesdites tiges soient déplacées librement suivant leur axe longitudinal par rapport à l'axe longitudinal desdites gaines.

Suivant la configuration du véhicule 13 fig. 1, la disposition des différentes fonctions réalisées par le présent dispositif, objet de l'invention, à savoir d'une manière non limitative, la manoeuvre des tiges, l'effet de pompage engendré par le déplacement desdites tiges, ou bien d'autres fonctions découlant de la présente invention, et données à titre d'exemple nullement limitatif, lesdites différentes fonctions peuvent être disposées à volonté, comme le montrent les figures sur le dessin, à savoir:
- fig. 19 : où l'on voit un vérin unique 121, situé, par exemple, en pavillon de véhicule 130, de telle sorte que chaque couple de tiges avant ou arrière de manoeuvre 122A/122B, soit attelé à un piston respectivement 129A/129B, chaque piston 129A/129B pouvant être immobilisé dans ledit vérin 121 grâce à un by-pass réalisé par sélection électrique des électro-distributeurs 124 lesdites tiges de manoeuvre 122A/122B, coulissant dans les gaines 121A/B, puis dans lesdits guides 5/8, et ensuite réalisant l'effet de pompage décrit plus haut grâce aux pistons 42A coulissant dans les tubes de protection 2A. Dans cette configuration fig. 19, le vérin unique 121 peut être de n'importe quelle forme, telle circulaire suivant la figure 20, forme donnée à titre d'exemple nullement limitatif.

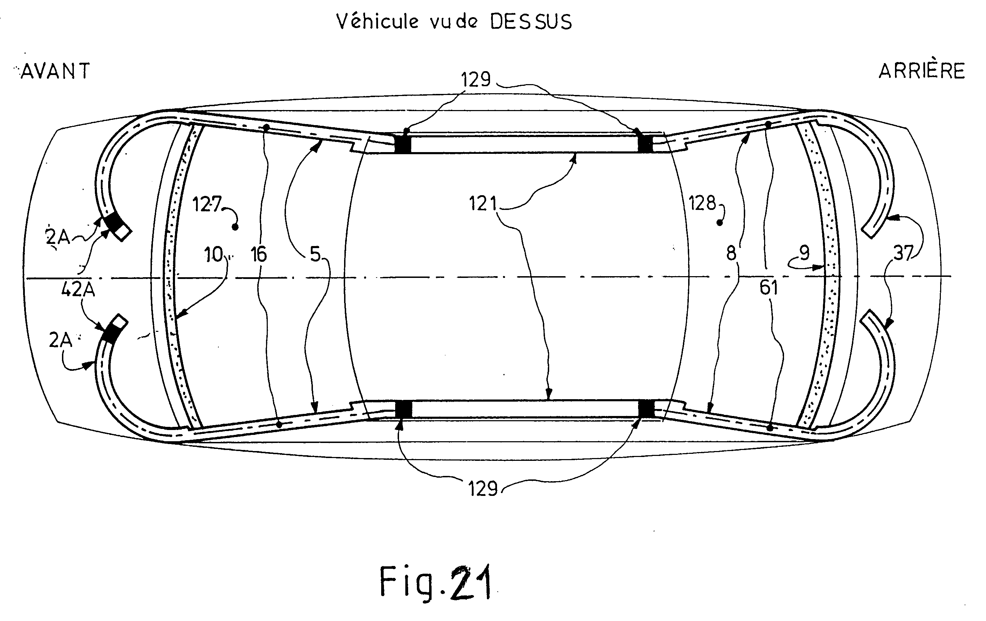

- fig. 21 : où l'on voit le même cas de disposition desdites fonctions décrites fig. 20, mais où lesdits pistons de manoeuvre 129 peuvent être situés dans deux gaines-vérins 121, dissociées de telle sorte que le déplacement simultané de chaque lame 10 et 9 est assuré par un dispositif de génération tel que décrit plus haut à la figure 4C, donné ici à titre d'exemple non limitatif, de manière à assurer le déplacement simultané des deux tiges avant ou des deux tiges arrière de manoeuvre.

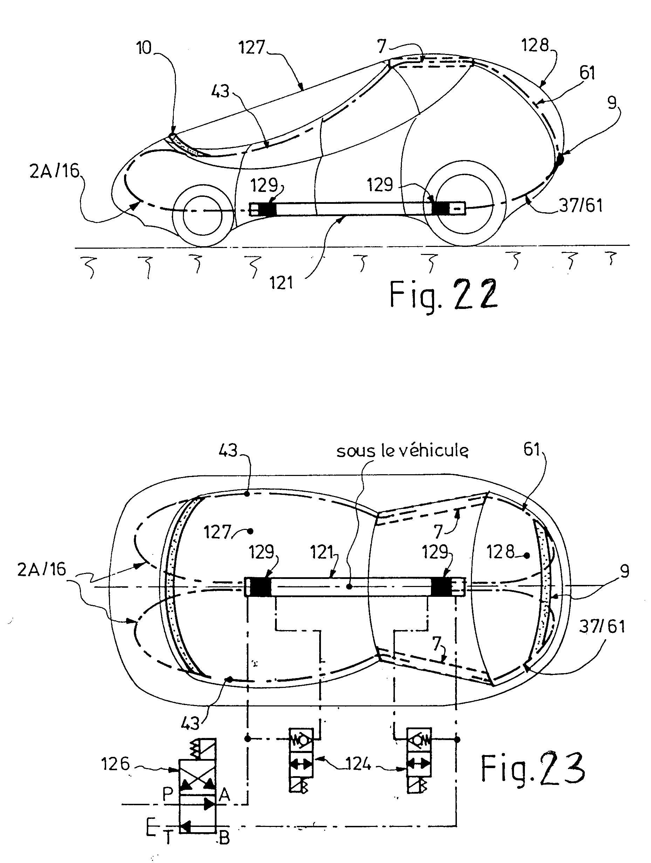

- fig. 22 et 23 : où l'on voit une autre disposition des différentes fonctions, et où le vérin unique de manoeuvre 121 est situé sous le véhicule ainsi que les gaines de guidage 2A/16 et 37/61, de telle sorte que chaque piston 129 peut être manoeuvré indépendamment dans ledit vérin 121, en fonction de la commande des électro-distributeurs 124 et 126.

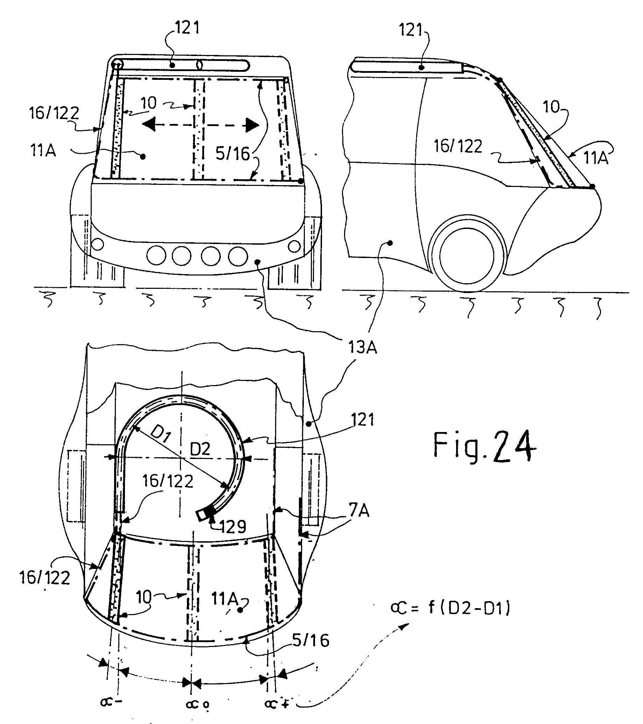

- fig. 24 : montrant le positionnement vertical de la lame de nettoyage 10, de telle sorte que le vérin de manoeuvre 121, situé ici en pavillon de véhicule, assure le déplacement desdites tiges de manoeuvre 16/122 grâce aux gaines de guidage 5/16, bordant les parties supérieures et inférieures du pare-brise 11A du véhicule 13A, de même que la gaine 16/122 assurant la contenance de la tige.

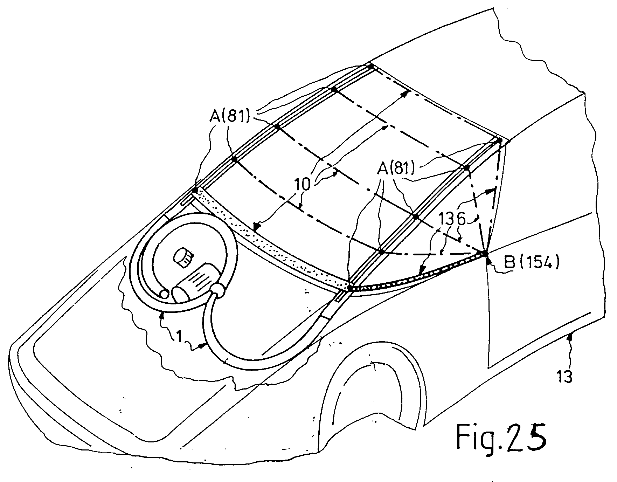

- fig. 25 : montrant un des avantages de la présente invention donné ici à titre d'exemple non limitatif, de telle sorte qu'une lame 136, de conception similaire à la lame 9 fig. 4A ou 10 fig.13, ladite lame 136 fig. 25 ayant une extrémité articulée en B (154), fixée sur le véhicule 13 et l'autre extrémité opposée de ladite lame 136 attelée et articulée en A (81) fig. 11, ce point A situé sur la pièce 16/43 de telle sorte que ladite lame 136 fig. 25 assure le nettoyage de la surface décrite entre ledit point d'articulation B de ladite lame 136 et l'ensemble des points décrits par ledit point A (81), situé sur ladite pièce 16/43, fig.11.

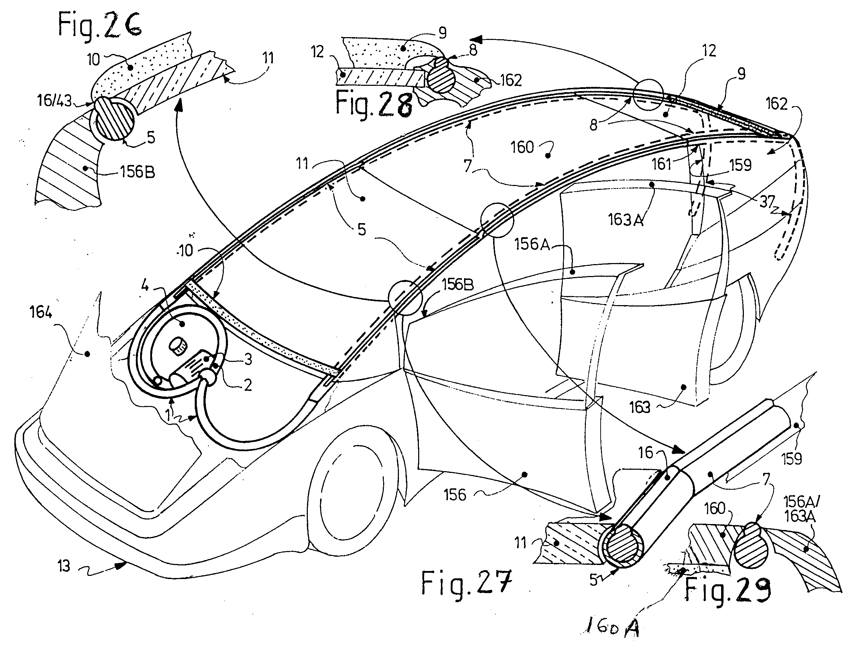

- fig. 27 : montrant une des possibilités de montage du système objet de l'invention, donnée à titre d'exemple non limitatif, et où ledit système se présente sous forme d'un faisceau semi-rigide mis en place lorsque les portières 156, 163 et le capot 164 du véhicule 13 sont ouverts, de telle sorte que le piston synchronisateur 2 et les gaines de manoeuvre 1 sont fixés au-dessus du moteur dudit véhicule, de telle sorte que, dès le démarrage du véhicule, et par effet de conduction thermique provoqué par ledit moteur, le système s'élève légèrement en température, de telle sorte que le faisceau 2,1 et 5 ait la capacité de faire fondre toute glace ou neige qui pourrait immobiliser ledit système.
   Ainsi exposé, les pièces 2 et 1 fig. 1 sont fixées sur ledit moteur, ainsi que la centrale de motorisation fluidique 3, ainsi que la centrale du liquide de nettoyage 4.
   Les gaines avant de manoeuvre 5 fig. 27 sont fixées de telle sorte que la pièce d'attelage 16/43 fig. 26 de la lame 10 soit positionnée judicieusement de telle sorte que ladite gaine avant de manoeuvre 5 remplisse sont rôle optimum vis-à-vis de la vitre 11 et de la bordure de portière 156B.
   La gaine auxiliaire de manoeuvre 7 fig. 29 est fixée tel un joint entre le pavillon 160 et les bordures supérieures 156A/163A des portières 156 et 163 fig. 27.
   Les gaines de manoeuvre 8 fig. 27 sont introduites 161 séparément entre le pavillon 160 et la garniture intérieure du pavillon 160A Fig. 29 de telle sorte que chacune desdites gaines arrière de guidage 8 fig. 28 borde chaque côté latéral de la vitre arrière 12, les gaines de protection arrière 37 fig. 27 étant alors introduites de la manière la plus judicieuse dans la carrosserie arrière 162 du véhicule 13,ladite carrosserie étant le support de la vitre arrière 12.

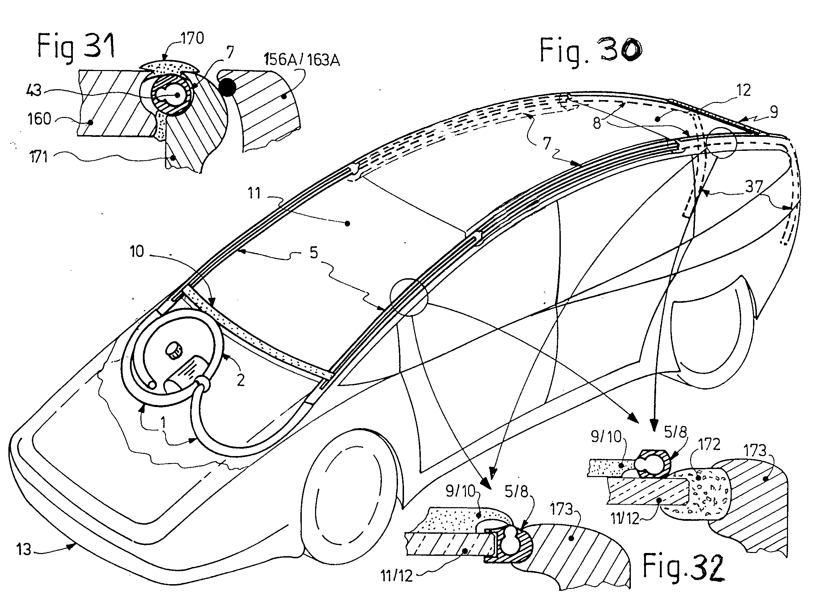

- fig. 30 : montrant une autre possibilité de mise en place de la présente invention, donnée ici à titre d'exemple non limitatif, de telle sorte que les gaines avant de manoeuvre 5 sont collées sur chaque côté latéral du pare-brise avant 11, que les gaines auxiliaires de manoeuvre 7 sont logées sous un joint d'étanchéité 170 fig. 31 entre la custode 160 et la tôle latérale 171 du véhicule, et le gaines arrières de manoeuvre 8 fig. 32, sont, par exemple collées sur la vitre de custode 12, contre ou sur le joint 172, ou à la place dudit joint entre la vitre 12 et le montant 173 de ladite vitre 12, tandis que la gaine arrière de manoeuvre 37 est introduite tel que décrit précédemment à l'intérieur de la malle arrière 162 dudit véhicule 13.

## Revendications

1. Dispositif d'essuie-glace du type comportant un balai d'essuie-glace présentant au moins deux lèvres semi-élastiques séparées par un canal, dispositif dans lequel les deux lèvres coopèrent avec le pare-brise pour former une chambre (90) fermée et étanche, caractérisé en ce que ladite chambre (90) est raccordée à une source de dépression pour assurer, quelque soit le sens de déplacement du balai de la lame avant (10), une aspiration quasi-permanente des particules dans ladite chambre (90).

2. Dispositif d'essuie- glace du type comportant un balai d'essuie-glace présentant au moins deux lèvres semi-élastiques séparées par un canal, dispositif dans lequel les deux lèvres coopèrent avec le pare-brise à essuyer pour former une chambre fermée (90), caractérisé en ce que ladite chambre (90) est raccordée à une source pour assurer, quelque soit le sens de déplacement du balai de la lame avant (10), soit une aspiration quasi-permanente des particules dans ladite chambre (90), soit l'envoi quasi-permanent d'un liquide de lavage (50) dans ladite chambre (90), selon qu'un électro-distributeur (34) est en position de repos (figure 18) ou en position excitée (figure 18 A).

3. Dispositif d'essuie-glace selon la revendication 1 ou selon la revendication 2 caractérisé en ce que la lame d'essuie-glace (10) est mobile suivant un mouvement linéaire alternatif, les extrémités dudit balai étant guidées par des organes de manoeuvre disposés le long des bords latéraux du pare-brise.

4. Dispositif d'essuie-glace selon la revendication 3 caractérisé en ce que les organes de manoeuvre sont constitués par une tige flexible (16) de section cylindrique mobile dans une gaine de guidage (5) présentant une fente latérale, ladite tige (16) présentant un moyen d'accrochage de la lame de nettoyage (10).

5. Dispositif d'essuie-glace selon la revendication 4 caractérisé en ce que les organes de manoeuvre sont constitués par une tige flexible (16) solidaire d'un piston (22) mobile alternativement sous l'effet d'un fluide (31, 32, 26) dans une chambre de vérin (1).

6. Dispositif d'essuie-glace selon l'une quelconque des revendications 3 à 5 caractérisé en ce que les organes de manoeuvre sont constitués par deux tiges (16) solidaire d'un organe commun (42) mobile dans un guide (2), lesdites tiges se déplaçant linéairement d'une manière uniforme et sensiblement parallèles entre elles.

7. Dispositif d'essuie-glace selon l'une quelconque des revendications 3 à 5 caractérisé en ce que les tiges (16) sont creuses et permettent la circulation d'un fluide suivant leur axe longitudinal.

8. Dispositif d'essuie-glace selon l'une quelconque des revendications 6 à 7 caractérisé en ce que l'organe commun (42) est constitué par un piston coulissant dans un tube (2) raccordé par des tubulures creuses aux tiges flexibles de manoeuvre (16), le piston (42) étant équipé de clapets anti-retour (20A, 21A) constitue une pompe mono-piston linéaire alternative à aspiration et compression constante provoquant le déplacement du fluide dans les tubulures creuses (110).

9. Dispositif d'essuie-glace selon l'une quelconque des revendications 1 à 8 caractérisé en ce que le fluide actionné par la pompe alternative est aspirée ou refoulée dans la tubulure (110) raccordée aux tiges (16).

10. Dispositif d'essuie-glace selon l'une quelconque des revendications 3 à 5 caractérisé en ce que les tiges de manoeuvre (16, 43) coulissent dans des gaines (1A, 1B), le fluide de manoeuvre remplissant l'espace compris entre la surface de la gaine et la surface de la tige (16) correspondante.

11. Dispositif d'essuie-glace selon l'une quelconque des revendications 3, 4, 5 et 10 caractérisé en ce que la rainure de la gaine destinée au passage de l'attache de la lame de nettoyage (10) est obturée par la tige de manoeuvre (16).

12. Dispositif d'essuie-glace selon la revendication 11 caractérisé en ce que la tige de manoeuvre (16) présente au-delà de l'attache de la lame d'essuyage (10) un prolongement (43) mobile dans une seconde gaine fermée (7) prolongeant la gaine de guidage (5) pour former un piston de pompage-refoulement.

13. Dispositif d'essuie-glace selon la revendication 12 caractérisé en ce qu'il comporte une électrovanne permettant soit de fermer la chambre (R) de la gaine de protection (7), soit de raccorder ladite chambre (R) à un réservoir de fluide de manoeuvre (32), et en ce que les gaines entourant la tige de manoeuvre (43) et la tige arrière (7) communiquent de façon à ce que le déplacement de la tige de manoeuvre (43) provoque un déplacement de la tige arrière (61).

14. Dispositif d'essuie-glace selon l'une quelconque des revendications 6, 12 et 13 caractérisé en ce que la lame de nettoyage (10) est tendue entre les tiges de manoeuvre (61) se déplaçant de manière identique et simultanée.

15. Dispositif d'essuie-glace selon la revendication 2 caractérisé en ce que la pompe E comporte un piston synchronisateur (42) muni de deux clapets anti-retour (20A/B, 21A/B) formant avec leur siège des surfaces autonettoyantes.

## Claims

1. A windshield device of the type including a windshield wiper provided with at least two semi-elastic lips separated by a channel, wherein both lips cooperate with the windshield to form a closed and sealed chamber (90), characterized in that said chamber (90) is connected to a low pressure source in order to ensure, whatever the direction of the fore wiper (10) movement is, an almost permanent sucking action of particles into said chamber (90).

2. A windshield device of the type including a windshield wiper formed of a least two semi-elastic lips separated by a channel, wherein both lips cooperate with the windshield to be wiped to form a closed chamber (90), characterized in that said chamber (90) is connected with a source in order to ensure, whatever the direction of the fore wiper (10) movement is, either an almost permanent sucking action of particles into said chamber (90), or an almost permanent supply of a washing liquid (50) into said chamber (90), according to whether an electro-distributor (34) is at rest (figure 18) or at an excited position (figure 18 A).

3. The windshield device as recited in claim 1 or claim 2, characterized in that said windshield wiper (10) is movable according to an alternative linear movement, with said wiper ends being guided by operating members provided along windshield lateral edges.

4. The windshield device as recited in claim 3, characterized in that said operating members include a flexible rod (16) having a cylindrical cross-section and movable into a guiding sleeve (5) provided with a lateral slot, said rod (16) being fitted with a means for hooking said wiper (10).

5. The windshield device as recited claim 4, characterized in that said operating members include a flexible rod (16) integral piston 22, alternatively movable owing to a fluid action (31, 32, 26) in an actuator (1) chamber.

6. The windshield device as recited in any claims 3-5, characterized in that said operating members include two rods (16) integral with a common member (42) which can move in a guide (2), with both rods being able to linearly move according to a uniform and substantially parallel manner.

7. The windshield device as recited in any claims 3-5, characterized in that both rods (16) are hollow and allow a fluid to circulate according to their longitudinal axis.

8. The windshield device as recited in any claims 6-7, characterized in that said common member (42) includes a piston which slides in a tube (2) connected by hollow ducts to said flexible operating rods (16), said piston (42) being provided with non-return valves (20A, 21A), thereby forming an alternative linear monopiston pump with constant sucking and compression, with the result that said fluid flows in said hollow ducts (110).

9. The windshield device as recited in any claims 1-8, characterized in that said fluid driven by said alternative pump is sucked or discharged in the duct (110) which is connected to said rods (16).

10. The windshield device as recited in any claims 3-5, characterized in that said operating rods (16, 4) slide into sleeves (1A, 1B), with the operating fluid filling the space formed between sleeve surface and corresponding rod (16) surface.

11. The windshield device as recited in any claims 3, 4, 5 and 10, characterized in that sleeve groove designed to allow said wiper (10) fastener to pass is closed by said operating rod (16).

12. The windshield device as recited in claim 11, characterized in that said operating rod (16) is provided beyond said wiper (10) fastener with an extension (43) which moves into a second closed sleeve (7), thereby extending said guiding sleeve (5) to form a discharge pumping piston.

13. The windshield device as recited in claim 12, characterized in that it includes an electro-valve which allows either closing of chamber (R) of said protecting sleeve (7), or connecting said chamber (R) to an operating fluid (32) tank, and in that sleeves surrounding said operating rod (43) and rear rod (7) communicate so that said operating rod (43) movement causes said rear rod (61) to move.

14. The windshield device as recited in any claims 6, 12 and 13, characterized in that said wiper (10) is tightened between said operating rods (61) which identically and simultaneously move.

15. The windshield device as recited in claim 2, characterized in that pump (E) includes a synchronizing piston (42) provided with two non-return valves (20A/B, 21A/B) with form self-cleaning surfaces with the seat thereof.

## Patentansprüche

1. Scheibenwischervorrichtung vom Typ umfassend ein Scheibenwischerblatt mit mindestens zwei halbelastischen, durch einen Kanal voneinander getrennten Lippen, in welcher die beiden Lippen mit der Windschutzscheibe zusammenwirken, um eine geschlossene und dichte Kammer (90) zu bilden,
dadurch gekennzeichnet,
daß die Kammer (90) mit einer Unterdruckquelle verbunden ist, um in jeder Bewegungsrichtung des Wischers des vorderen Blattes (10) eine beinahe ständige Absaugung der Partikel in der genannten Kammer (90) zu gewährleisten.

2. Scheibenwischervorrichtung vom Typ umfassend ein Scheibenwischerblatt mit mindestens zwei halbelastischen, durch einen Kanal voneinander getrennten Lippen, in welcher die beiden Lippen mit der zu wischenden Windschutzscheibe zusammenwirken, um eine geschlossene Kammer (90) zu bilden,
dadurch gekennzeichnet,
daß die genannte Kammer (90) mit einer Quelle verbunden ist, um in jeder Bewegungsrichtung des Wischers des vorderen Blattes (10) entweder eine beinahe ständige Absaugung der Partikel in der genannten Kammer (90) oder die beinahe ständige Zufuhr einer Waschflüssigkeit (50) in die genannte Kammer (90) zu gewährleisten je nachdem, ob sich ein elektrischer Verteiler (34) in Ruheposition (Fig. 18) oder in erregter Position (Fig. 18 A) befindet.

3. Scheibenwischervorrichtung gemäß Anspruch 1 oder 2,
dadurch gekennzeichnet,
daß das Scheibenwischerblatt (10) gemäß einer linearen alternierenden Bewegung bewegbar ist, wobei die Enden des genannten Wischers von Steuerorganen geführt werden, welche längs der Seitenkanten der Windschutzscheibe angeordnet sind.

4. Scheibenwischervorrichtung gemäß Anspruch 3,
dadurch gekennzeichnet,
daß die Steuerorgane aus einer flexiblen Stange (16) mit zylindrischem Querschnitt bestehen, welche in einer einen seitlichen Spalt aufweisenden Führungshülse (5) bewegbar angeordnet ist und Mittel zur Befestigung des Wischblattes (10) aufweist.

5. Scheibenwischervorrichtung gemäß Anspruch 4,
dadurch gekennzeichnet,
daß die Steuerorgane aus einer flexiblen Stange (16) bestehen, welche mit einem in einer Zylinderkammer (1) unter der Einwirkung eines Fluids (31, 32, 26) alternierend bewegbaren Kolben (22) zusammenwirkt.

6. Scheibenwischervorrichtung gemäß einem der Ansprüche 3 bis 5,
dadurch gekennzeichnet,
daß die Steuerorgane aus zwei Stangen (16) bestehen, welche mit einem gemeinsamen, innerhalb einer Führung (2) bewegbaren Organ (42) zusammenwirken und sich linear und gleichmäßig und im wesentlichen parallel zueinander bewegen.

7. Scheibenwischervorrichtung gemäß einem der Ansprüche 3 bis 5,
dadurch gekennzeichnet,
daß die Stangen (16) hohl sind und die Zirkulation eines Fluids entlang ihrer Längsachse ermöglichen.

8. Scheibenwischervorrichtung gemäß einem der Ansprüche 6 bis 7,
dadurch gekennzeichnet,
daß das gemeinsame Organ (42) aus einem Kolben besteht, der in einer mittels hohler Stutzen an den flexiblen Steuerstangen (16) angeschlossenen Röhre (2) verschiebbar angeordnet ist, wobei der Kolben (42) mit Einwegventilen (20A, 21A) versehen ist und eine lineare alternierende Einkolben-Pumpe mit konstanter Absaugung und Kompression bildet, welche die Verschiebung des Fluids in den hohlen Stutzen (110) erzeugt.

9. Scheibenwischervorrichtung gemäß einem der Ansprüche 1 bis 8,
dadurch gekennzeichnet,
daß das von der alternierenden Pumpe betätigte Fluid in den an den Stangen (16) angeschlossenen Stutzen (110) angesaugt oder gedrückt wird.

10. Scheibenwischervorrichtung gemäß einem der Ansprüche 3 bis 5,
dadurch gekennzeichnet,
daß die Steuerstangen (16, 43) in Hülsen (1A, 1B) verschiebbar angeordnet sind, wobei das Steuerfluid den Raum zwischen der Oberfläche der Hülse und der Oberfläche der korrespondierenden Stange (16) füllt.

11. Scheibenwischervorrichtung gemäß einem der Ansprüche 3, 4, 5 und 10,
dadurch gekennzeichnet,
daß der Spalt in der Hülse, welche als Durchlaß für die Befestigung des Wischblattes (10) dient, durch die Steuerstange (16) verschlossen ist.

12. Scheibenwischervorrichtung gemäß Anspruch 11,
dadurch gekennzeichnet,
daß die Steuerstange (16) jenseits der Befestigung des Wischblattes (10) eine in einer zweiten, geschlossenen Hülse (7) bewegliche Verlängerung (43) aufweist, welche die Führungshülse (5) verlängert, um einen Pump-Druck-Kolben zu bilden.

13. Scheibenwischervorrichtung gemäß Anspruch 12,
dadurch gekennzeichnet,
daß sie ein Elektroventil aufweist, welches es ermöglicht, entweder die Kammer (R) der Schutzhülse (7) zu schließen, oder die genannte Kammer (R) mit einem Steuerfluidbehälter (32) zu verbinden, und daß die die Steuerstange (43) und die hintere Stange (7) umgebenden Hülsen so miteinander kommunizieren, daß die Verlagerung der Steuerstange (43) eine Verlagerung der hinteren Stange (7) verursacht.

14. Scheibenwischervorrichtung gemäß einem der Ansprüche 6, 12 und 13,
dadurch gekennzeichnet,
daß das Wischblatt (10) zwischen den Steuerstangen (61) gespannt ist, welche sich auf identische und synchrone Weise bewegen.

15. Scheibenwischervorrichtung gemäß Anspruch 2,
dadurch gekennzeichnet,
daß die Pumpe E einen Synchronisationskolben (42) umfaßt, der mit zwei Einwegventilen (20A/B, 21A/B) versehen ist, welche mit ihrem Sitz selbstreinigende Flächen bilden.
